(19) **Europäisches Patentamt / European Patent Office / Office européen des brevets**

(11) **EP 3 778 346 B1**

(12) **EUROPEAN PATENT SPECIFICATION**

(45) Date of publication and mention of the grant of the patent:
**23.04.2025 Bulletin 2025/17**

(21) Application number: **19851483.8**

(22) Date of filing: **16.01.2019**

(51) International Patent Classification (IPC):
**B61L 25/02** *(2006.01)*    **B61L 25/04** *(2006.01)*
**B61L 27/40** *(2022.01)*    **G01S 13/87** *(2006.01)*
**G01S 17/08** *(2006.01)*    **G01S 17/89** *(2020.01)*

(52) Cooperative Patent Classification (CPC):
**B61L 25/025; B61L 25/026; B61L 25/028; B61L 25/045; B61L 27/40; G01S 13/426; G01S 17/89;** G01S 13/878

(86) International application number:
**PCT/CN2019/071957**

(87) International publication number:
**WO 2020/037944 (27.02.2020 Gazette 2020/09)**

(54) **THREE-DIMENSIONAL POSITIONING SYSTEM FOR RAILWAY VEHICLE**

DREIDIMENSIONALES POSITIONIERUNGSSYSTEM FÜR EIN SCHIENENFAHRZEUG

SYSTÈME DE POSITIONNEMENT TRIDIMENSIONNEL POUR VÉHICULE FERROVIAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2018 CN 201810973414**

(43) Date of publication of application:
**17.02.2021 Bulletin 2021/07**

(73) Proprietor: **China Railway Wuhan Survey and Design Institute Co., Ltd.**
**Wuhan, Hubei 430074 (CN)**

(72) Inventors:
- **CAI, Jiajun**
  **Wuhan, Hubei 430074 (CN)**
- **XIAO, Yusong**
  **Wuhan, Hubei 430074 (CN)**
- **WANG, Zengli**
  **Wuhan, Hubei 430074 (CN)**
- **LIU, Changyu**
  **Wuhan, Hubei 430074 (CN)**
- **ZHANG, Feng**
  **Wuhan, Hubei 430074 (CN)**
- **ZHANG, He**
  **Wuhan, Hubei 430074 (CN)**
- **YANG, Jingmin**
  **Wuhan, Hubei 430074 (CN)**
- **CAI, Yunfeng**
  **Wuhan, Hubei 430074 (CN)**
- **ZHANG, Jianan**
  **Wuhan, Hubei 430074 (CN)**
- **LI, Rui**
  **Wuhan, Hubei 430074 (CN)**
- **FANG, Yafei**
  **Wuhan, Hubei 430074 (CN)**
- **HUANG, Zexing**
  **Wuhan, Hubei 430074 (CN)**
- **LI, Anrui**
  **Wuhan, Hubei 430074 (CN)**

(74) Representative: **Murgitroyd & Company**
**165-169 Scotland Street**
**Glasgow G5 8PL (GB)**

(56) References cited:
CN-A- 101 786 461      CN-A- 102 762 430
CN-A- 104 228 884      CN-A- 107 097 813
CN-U- 201 494 472      CN-U- 201 604 666
CN-U- 206 475 890      CN-U- 207 078 155
DE-A1- 102007 040 165   DE-A1- 102010 031 910
JP-A- 2015 147 481      JP-A- 2017 013 725
US-A1- 2007 146 159     US-A1- 2007 150 129
US-A1- 2016 264 163

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

• WANG, QILONG: "Position Tracking and Positioning System of Bullet Train", SHANGHAI RAILWAY SCIENCE & TECHNOLOGY, 31 January 2010 (2010-01-31), pages 71 - 73, XP009524111

## Description

### Technical Field

The invention relates to the technical field of passive vehicle positioning, in particular to a three-dimensional positioning system for a railway vehicle.

### Background Art

Railway transportation is a kind of transportation method using a railway train to transport goods, which is characterized by large volume, high speed and low cost. The types of railway transportation can be divided into complete vehicle transportation, zero-load transportation and container transportation. Among them, the container transportation can reduce the loss and damage of goods and ensure the quality of transportation, which is an important direction of the development of goods transportation.

In the container transportation process, the container needs to be loaded and unloaded, and in order to realize the automation of the loading and unloading operation, it is required to accurately position the railway vehicle loaded with the container. Since a container-loaded railway vehicle is a passive and mobile object, it needs to be positioned using a positioning system for the railway vehicle.

At present, the positioning system for the railway vehicle mostly adopts a track circuit positioning method, but the method can only position a track section where the railway vehicle is located, so that a specific position of the railway vehicle on the track section cannot be positioned, with a large error range and low positioning accuracy. It is therefore necessary to design a new positioning system for the railway vehicle to overcome the above problems.

US2016264163A1 discloses a profile detection system having first and second position sensors.

US2007146159A1 discloses a system which determines real-time locations of railcars in a railroad environment.

US2007150129A1 discloses methods and systems for monitoring trains in a railyard.

DE102010031910A1 discloses a method for determining the fill level of a route-bound, self-propelled or externally-driven vehicle logistics system.

### Summary of the Invention

The invention aims to overcome the defects of the prior art and provides a three-dimensional positioning system for railway vehicles so as to improve positioning accuracy. The invention is realized as follows.

The invention provides a three-dimensional positioning system for a railway vehicle, as defined by claim 1.

Optionally, the system further comprises a station vehicle in stock sub-system, and the vehicle number recognition sub-system sends the obtained vehicle information of each railway vehicle to the monitoring sub-system, specifically comprises:

sending the obtained vehicle information of each railway vehicle to a station vehicle in stock sub-system, so that the station vehicle in stock sub-system integrates various pieces of vehicle information, in the obtained vehicle information, which are detected at the same time and have the number of the track line to obtain the information to be monitored corresponding to each track line, and send the information to be monitored corresponding to each track line to the monitoring sub-system.

Optionally, the monitoring sub-system is used, for each track line in the station, for using the obtained information to be monitored corresponding to the track line to determine a standard length of the object to be positioned stopping on the track line, specifically comprising:

for each track line in the station, when the information to be monitored corresponding to the track line only comprises one vehicle number, determining the standard length of a single railway vehicle with the vehicle number in the information to be monitored as the standard length of the object to be positioned stopping on the track line; and when the information to be monitored corresponding to the track line comprises a plurality of vehicle numbers, obtaining the standard lengths of a plurality of railway vehicles with the vehicle numbers in the information to be monitored, and calculating the sum of the standard lengths to serve as the standard length of the object to be positioned stopping on the track line.

Optionally, the two ends of the track line are provided with reference points, the three-dimensional range finder is provided outside the reference points, the outside being a side far away from the station; and when the object to be positioned stopping on the track line is separated into a plurality of train units, the object to be positioned is a railway train; based on the standard length and the distance information of the object to be positioned on the track line, the monitoring sub-system calculates the railway mileage coordinate of the object to be positioned on the track line and finishes the positioning of the object to be positioned on the track line, specifically comprising:

obtaining railway mileage coordinates of two reference points at the two ends of the track line;
calculating the sum of the actual lengths of each train unit to obtain the actual length of the railway train on the track line;

calculating a corrected length of each railway vehicle in the railway train stopping on the track line according to the actual length and the standard length;

for each railway vehicle in the railway train stopping on the track, calculating the railway mileage coordinate of the railway vehicle according to the railway mileage coordinates of the two reference points, the transverse distance of the railway train on the track line, and the separation distance between each train unit in the railway train on the track and the corrected length of the railway vehicle; and after calculating the railway mileage coordinate of each railway vehicle in the railway train, finishing the positioning of the railway train on the track line.

Optionally, the information to be monitored corresponding to the track line further comprises an arrangement sequence of each railway vehicle in the railway train stopping on the track line, and the monitoring sub-system calculates a corrected length of each railway vehicle in the railway train by using the following formula:

$$li' = li + \Delta\varepsilon$$
;

$$\Delta\varepsilon = \frac{L1 - L2}{n}$$
;

$$L2 = lt + \sum_{i=1}^{n} li$$
;

wherein, $li'$ represents the corrected length of the railway vehicle at an $i^{th}$ position behind the locomotive of the railway train, $li$ represents the standard length of the railway vehicle at the $i^{th}$ position behind the locomotive of the railway train, $\Delta\varepsilon$ represents the correction amount, L1 represents the actual length of the railway train, L2 represents the standard length of the railway train, $lt$ represents the standard length of the locomotive, and n represents the total number of railway vehicles except a locomotive in the railway train.

Optionally, the greater of the railway mileage coordinates and the lesser of the railway mileage coordinates in the two reference points are a first reference point and a second reference point, respectively; and the monitoring sub-system is used, for each railway vehicle in the railway train stopping on the track line when the locomotive in the railway train stopping on the track is close to the three-dimensional range finder, for calculating the railway mileage coordinate of the railway vehicle by using the railway mileage coordinates of the two reference points, the transverse distance of the railway train on the track line, the separation distance between each train unit of the railway train on the track line and the corrected length of the railway vehicle, specifically comprising:

calculating the distance between the railway vehicle and the locomotive of the railway vehicle as a spacing distance of the railway vehicle based on the corrected length of the railway vehicle and the position of the railway vehicle for each railway vehicle in the railway train stopping on the track line; when the three-dimensional range finder is close to the first reference point, obtaining the distance between the first reference point and the three-dimensional range finder, and calculating the railway mileage coordinate of the railway vehicle by adopting the following formula: d1=LT-r1, x=M1-d1-D; when the three-dimensional range finder is close to the second reference point, obtaining the distance between the second reference point and the three-dimensional range finder, and calculating the railway mileage coordinate of the railway vehicle by adopting the following formula: d2=LT-r2, x=M2+d2+D;

wherein, d1 and d2 respectively represent the distance between a locomotive and a first reference point and the distance between the locomotive and the second reference point, LT represents the transverse distance of the railway train on the track line, r1 and r2 respectively represent the distance between the first reference point and the three-dimensional range finder and the distance between the second reference point and the three-dimensional range finder, D represents the spacing distance of the railway vehicle, m1 and M2 represent the railway mileage coordinates of the first reference point and the second reference point respectively, and x represents the railway mileage coordinate of the railway vehicle.

Optionally, the monitoring sub-system calculates the spacing distance by using the following formula:

$$D_{ij} = lt + \sum_{r=1}^{i-1} lr' + \frac{1}{2} li' + \sum_{r=1}^{j-1} kr;$$

wherein, $D_{ij}$ represents the spacing distance of the railway vehicle at the $i^{th}$ position behind the locomotive and at the $j^{th}$

train unit, $lt$ represents the standard length of the locomotive, $lr'$ represents the corrected length of the railway vehicle at a $r^{th}$ position behind the locomotive, $li'$ represents the corrected length of the railway vehicle at the $i^{th}$ position behind the locomotive, and kj represents a separation distance between a $(j-1)^{th}$ train unit and the $j^{th}$ train unit.

Optionally, two ends of each track line are provided with reference points, the three-dimensional range finder is provided outside the reference points, the outside being a side far away from the station; when the object to be positioned stopping on the track line is a single railway vehicle, the monitoring sub-system calculates the railway mileage coordinate of the object to be positioned on the track line based on the standard length and the distance information of the object to be positioned on the track line and finishes the positioning of the object to be positioned on the track line, specifically comprising:

obtaining railway mileage coordinates of two reference points at the two ends of the track line;

when the three-dimensional range finder is close to a first reference point, obtaining the distance between the first reference point and the three-dimensional range finder, and calculating a railway mileage coordinate of the single railway vehicle by adopting the following formula: d1=LT-r1, x=M1-d1-(w1+w2)/2; and when the three-dimensional range finder is close to the second reference point, obtaining the distance between the second reference point and the three-dimensional range finder, and calculating a railway mileage coordinate of the single railway vehicle by adopting the following formula: d2=LT-r2, x=M2+d2+(w1+w2)/2;

wherein, the first reference point and the second reference point are respectively the greater of the railway mileage coordinates and the lesser of the railway mileage coordinates in the two reference points, d1 and d2 respectively represent the distance between the single railway vehicle and the first reference point and the distance between the single railway vehicle and the second reference point, LT represents the transverse distance of the railway train on the track line, r1 and r2 respectively represent the distance between the first reference point and the three-dimensional range finder and the distance between the second reference point and the three-dimensional range finder, M1 and M2 respectively represent the railway mileage coordinates of the first reference point and the second reference point, W1 and W2 respectively represent the actual length and the standard length of the single railway vehicle, and x represents the railway mileage coordinates of the railway vehicle.

Optionally, the monitoring sub-system is further used for:
converting the railway mileage coordinate of the object to be positioned into a geographic coordinate after calculating the railway mileage coordinate of the object to be positioned.

The invention has the following beneficial effects. By applying the technical solutions provided by the embodiment of the invention, the vehicle information of each railway vehicle passing through the vehicle number ground recognition device can be obtained, and the various pieces of vehicle information, in the obtained vehicle information, which are detected at the same time and have the number of the track line are integrated to obtain the information to be monitored corresponding to each track line, so that the information to be monitored corresponding to each track line is utilized for each track line in the station to determine the standard length of the object to be positioned stopping on the track, calculate the railway mileage coordinate of the object to be positioned stopping on the track line based on the standard length and the distance information of the object to be positioned on the track line, and finish the positioning of the object to be positioned on the track line. Because the standard length and the distance information contain specific values related to the position of the object to be positioned, the calculated railway mileage coordinate of the object to be positioned are specific values, so that the positioning accuracy of the object to be positioned is improved, the positioning of the object to be positioned on all the track line can be completed only by arranging a three-dimensional range finder at a station provided with a plurality of track lines, the cost is saved, and the system complexity is simplified. The positioning of each railway vehicle in each train unit can still be detected under the condition that the railway train is separated into a plurality of train units, and the positioning accuracy is further improved.

**Brief Description of the Drawings**

In order to more clearly illustrate the embodiments of the present invention or the technical solutions in the prior art, reference will now be made briefly to the accompanying drawings, which are used in the description of the embodiments or the prior art, and it will be obvious to a person skilled in the art that the accompanying drawings described below are only some embodiments of the invention, and other drawings may be obtained from these drawings without involving any inventive effort.

Fig. 1 is a schematic diagram of a three-dimensional positioning system for a railway vehicle according to an embodiment of the present invention;
Fig. 2 is a schematic view showing an application scenario of the three-dimensional positioning system for the railway vehicle provided by the embodiment of the invention;

Fig. 3 is a schematic view showing an application scenario of the three-dimensional positioning system for the railway vehicle provided by the embodiment of the invention;

Fig. 4 is a schematic diagram of distance information measured by a three-dimensional range finder according to an embodiment of the present invention;

Fig. 5 is another schematic diagram of distance information measured by the three-dimensional range finder according to the embodiment of the present invention.

## Detailed Description of the Invention

The technical solutions in the embodiments of the present invention will be clearly and completely described below in conjunction with the accompanying drawings in the embodiments of the present invention. Obviously, the described embodiments are only a part of the embodiments of the present invention, rather than all the embodiments. Based on the embodiments of the present invention, all other embodiments obtained by one of ordinary skill in the art without involving any inventive effort are within the scope of the present invention.

In order to solve problems in the prior art, the embodiment of the invention provides a three-dimensional positioning system for a railway vehicle. The three-dimensional positioning system for the railway vehicle provided by the present invention will now be described.

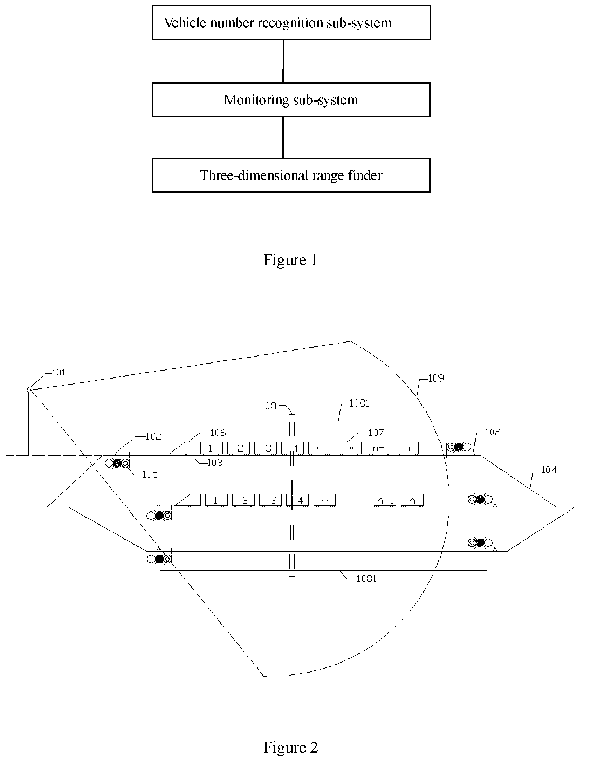

Referring to Fig. 1, the invention provides a three-dimensional positioning system for a railway vehicle, which is applied to a station and comprises a monitoring sub-system, a vehicle number recognition sub-system and a three-dimensional range finder, wherein the vehicle number recognition sub-system comprises a vehicle number ground recognition device, the station is provided with a plurality of track lines, two ends of each track line are provided with the vehicle number ground recognition devices, and a three-dimensional range finder is provided above the station;

the vehicle number recognition sub-system is used for obtaining vehicle information of each railway vehicle passing through the vehicle number ground recognition device and sending the obtained vehicle information of each railway vehicle to the monitoring sub-system; and the vehicle information comprises detection time and the number of the track line;

the three-dimensional range finder is used, for each track line in the station, for obtaining distance information of an object to be positioned stopping on each track line, and sending the distance information to the monitoring sub-system; and

the monitoring sub-system is used, for each track line in the station, for using the obtained information to be monitored corresponding to the track line to determine a standard length of the object to be positioned stopping on the track, and based on the standard length and the distance information of the object to be positioned on the track line to finish the positioning of the object to be positioned on the track line, calculating a railway mileage coordinate of the object to be positioned on the track line; wherein the information to be monitored corresponding to the track line is obtained by means of integrating various pieces of vehicle information, in the vehicle information, which are detected at the same time and have the number of the track line.

An electronic tag can be installed on the railway vehicle, and the electronic tag can be used for uniquely identify the railway vehicle. To facilitate recognition of the railway vehicle, the electronic tag of the railway vehicle may be installed at a bottom edge. The electronic tag can be composed of a microstrip antenna, a virtual power supply, a reflection modulator, an encoder, a microprocessor and a memory, and information such as a vehicle type and a vehicle number of the railway vehicle can be obtained by recognizing the electronic tag.

The station may include a section station, a marshalling station, a large-scale freight station, a demarcation station and the like, the station may be provided with one or more track lines, and the track lines may be divided into an arrival and departure line, a marshalling line, a loading and unloading line and the like. The two ends of each track line can be provided with vehicle number ground recognition devices, the vehicle number ground recognition device can be provided on the track lines, or beside the track lines, and also at each entry end of a station; and in order to avoid the influence on a running vehicle, the vehicle number ground recognition device may be provided beside the track lines. Each track line corresponds to two vehicle number ground recognition devices, the two vehicle number ground recognition devices corresponding to one track line can be used for collecting vehicle information of a railway vehicle running on the track line, the number of the track line where the railway vehicle collected by the vehicle number ground recognition devices is located can be determined by the number of the vehicle number ground recognition devices, and vice versa. The railway vehicle may be in the form of a single vehicle or may be a railway vehicle in a railway train. The railway train may also be referred to as a railway train set.

The vehicle number ground recognition device can be composed of a ground antenna, a wheel sensor, an RF (Radio Frequency) microwave radio frequency device, a readout computer (industrial personal computer) and the like, wherein the ground antenna and the wheel sensor are installed between the track lines, and the RF microwave radio frequency device, the readout computer and the like are installed in a detection machine room; the vehicle number ground recognition device can accurately recognize an electronic tag arranged on a railway vehicle passing through the recognition device, acquire the vehicle type, vehicle number and running direction of the railway vehicle, record the detection time, determine the arrangement sequence of the railway vehicle arriving at the station, the railway vehicle departing from the station and each railway vehicle, and determine the number of the track line where the railway vehicles are located by using the number of the ground recognition device for collecting the number of the railway vehicles, so that the vehicle number recognition sub-system can obtain the vehicle information of each railway vehicle in a single railway vehicle/railway train, thereby realizing that the system provides accurate and real-time basic information for a subsequent process of positioning the railway vehicles.

The system can further comprise a video acquisition sub-system, and the video acquisition system can be composed of an optical fiber channel, a tower, an image acquisition device, a vehicle number ground recognition device, an intelligent light control and the like. The real-time monitoring of the whole day can be realized by adopting the image acquisition device, the vehicle running condition at each monitoring point can be clearly acquired all day and night, and the acquired image/video data can be transmitted to the monitoring sub-system via the optical fiber channel; the definition of the video image can be provided by adopting an high-definition image acquisition device, so that the integrity degree of the compartment doors and windows can be clearly observed by the monitoring sub-system, and completeness and binding state of a tarpaulin, a top cover and a rope can be easily recognized. The monitoring points can be reasonably deployed to ensure that the monitoring area is fully covered without blind areas.

The monitoring sub-system can integrate the various pieces of vehicle information, in the obtained vehicle information, which are detected at the same time and have the number of the track line so as to obtain the information to be monitored; or in one implementation mode, the system further comprises a station vehicle in stock sub-system, the vehicle number recognition sub-system can be arranged at an entry end of the station, and the vehicle number recognition sub-system sends the obtained vehicle information of each railway vehicle to the monitoring sub-system, specifically comprising:

sending the obtained vehicle information of each railway vehicle to a station vehicle in stock sub-system, so that the station vehicle in stock sub-system integrates various pieces of vehicle information, in the obtained vehicle information, which are detected at the same time and have the number of the track line to obtain the information to be monitored corresponding to each track line, and send the information to be monitored corresponding to each track line to the monitoring sub-system. Therefore, the monitoring sub-system can obtain information to be monitored sent by the station vehicle in stock sub-system.

The three-dimensional range finder can scan downwards and is used for continuously and uninterruptedly measuring distance information of objects to be positioned stopping on each track line on the station line. The three-dimensional range finder may be a three-dimensional laser range finder or three-dimensional radar range finder.

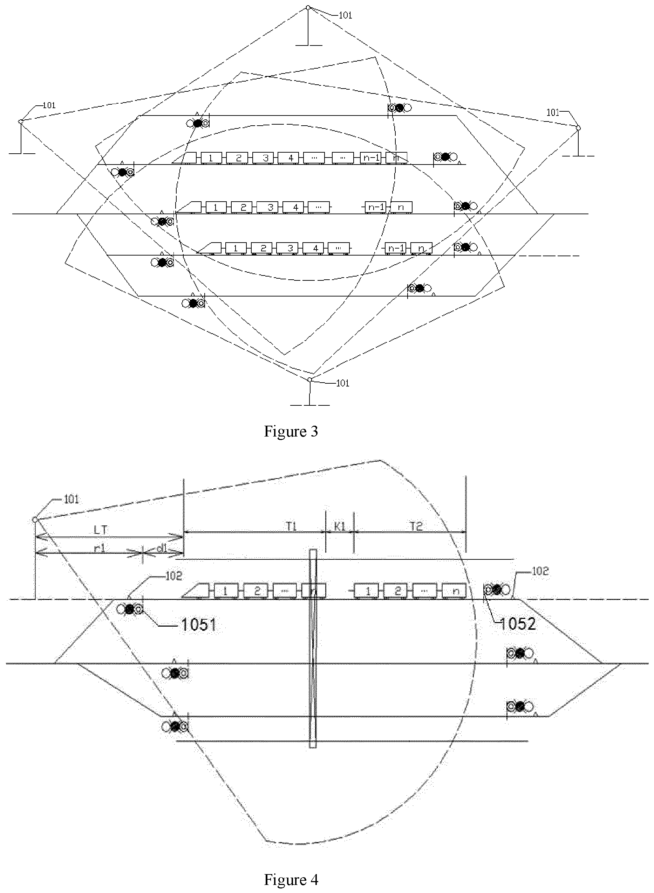

In order to reduce the interference of the three-dimensional range finder and the vehicle number ground recognition device on the operation of the railway train/single railway vehicle, as shown in Fig. 2, the vehicle number ground recognition device is provided outside the reference points (starting points) at two ends of the track line, and the reference points can be one of an annunciator, a fouling point indicator, an insulation joint and the like; and the three-dimensional range finder is provided outside the vehicle number ground recognition device and is located at a position high enough above the periphery of the station, the outside being a side far away from the station. In Fig. 2, 101 represents a three-dimensional range finder, 102 represents a vehicle number ground recognition device, 103 represents a track line, 104 represents a turnout shunting line, 105 represents an annunciator, 106 represents a locomotive, 107 represents a railway vehicle, 108 represents a gantry crane, 1081 represents a running line of the gantry crane, 109 represents a detection range of the three-dimensional range finder, and the whole station can be covered within the detection range. In addition, when the station is large, a plurality of three-dimensional range finders can be provided so that the detection range can cover the whole station, and the specific scene is shown in Fig. 3. When a plurality of three-dimensional range finders are provided, for a repeated coverage area, the average value of the distance measured by each three-dimensional range finder can be calculated to serve as distance information.

When the object to be positioned is a railway train, the railway train may be in a separated state, that is, may be separated into a plurality of train units, and each train unit may include one or more railway vehicles. It should be noted that the railway train enters the station in the form of a whole train, and after entering the station, may be separated into the respective train units, but the arrangement sequence of each railway vehicle in the railway train is not changed.

According to one implementation mode, the three-dimensional range finder obtains distance information of the object to be positioned stopping on the track, specifically comprising:

detecting a transverse distance between one end, close to the three-dimensional range finder, of the object to be positioned stopping on the track line and the three-dimensional range finder; and
judging whether the object to be positioned is separated into a plurality of train units;
if so, detecting a separation distance between each train unit and an actual length of each train unit, and taking the separation distance between each train unit, the actual length of each train unit and the detected transverse distance as distance information of the object to be positioned stopping on the track line;

If not, detecting the actual length of the object to be positioned, and taking the actual length and the detected transverse distance as distance information of the object to be positioned stopping on the track line.

The three-dimensional range finder can detect the transverse distance between one end, close to the three-dimensional range finder, of an object to be positioned stopping on the track line and the three-dimensional range finder, and the detection method specifically comprises the follows.

The three-dimensional range finder emits laser pulses which sequentially sweep each track line, and whether the laser pulses scan a railway vehicle is determined according to the reflection intensity; if the laser pulses scan the railway vehicle, the distance between the three-dimensional range finder and the railway vehicle to be measured is calculated by using a difference value between an emission time point and a return time point of the laser pulses; a precise clock controller is arranged in the three-dimensional range finder to synchronously measure a transverse scanning angle observation value and a longitudinal scanning angle observation value of the laser pulses; and the transverse distance between the scanning point of the railway vehicle to be measured and the three-dimensional range finder can be calculated according to the distance and the two angle observation values, and the track line where the railway vehicle is located can be determined.

The transverse distance between one end, close to the three-dimensional range finder, of an object to be positioned and the three-dimensional range finder can be as a transverse distance between the point of the object to be located closest to the three-dimensional range finder and the three-dimensional range finder. The transverse distance refers to a distance between the two along the direction of the track line.

The three-dimensional range finder can judge whether an object to be positioned is separated into a plurality of train units by using an image recognition technology; alternatively, it is also possible to determine whether the object to be positioned is separated into a plurality of train units according to the reflection intensity. Detecting the separation distance between each train unit by the three-dimensional range finder can comprise measuring the separation distance between each train unit, and the track line where the measured train unit is located by using an image ranging technology; or if the current laser pulse does not scan a railway vehicle, recording a emission time point of the current laser pulse, recording the emission time point of the next laser pulse when the railway vehicle is detected next time, and calculating the distance between the two train units by using the difference value of the two emission time points.

The method for detecting the actual length of each train unit by the three-dimensional range finder can comprise calculating the actual length of each train unit by using an angle difference between a minimum transverse scanning angle observation value and a maximum transverse scanning angle observation value, a distance measured by the laser pulse with the minimum transverse scanning angle observation value and a distance measured by the laser pulse with the maximum transverse scanning angle observation value in each laser pulse emitted by the continuous scanning for each time when the railway vehicle is continuously scanned.

In addition, the three-dimensional range finder can detect the actual length of each train unit, the actual length of the object to be positioned and the like by using the image ranging technology.

The measurement data of the three-dimensional range finder may be a three-dimensional image, and the three-dimensional image may include stopping positions of objects to be positioned and positions of reference points on all the track lines of the station within the detection range. The reference points may include an annunciator, a fouling point indicator, an insulation joint, etc. The three-dimensional range finder can exist in the form of a ranging system, the ranging system can comprise a digital image collector (comprising a synchronous controller, an analog-to-digital converter and a frame memory), an image processing computer and an image display terminal. A ranging task is processed by an image processing software, and the ranging system can be composed of a plurality of single processors to form an array processor so as to realize parallel operation and improve the processing speed and the real-time performance of detection.

The three-dimensional range finder can detect the distance information of the object to be positioned stopping on the track line in real time. When the object to be positioned enters a detection area of the three-dimensional range finder, if the object to be positioned is still running, the distance information measured by the three-dimensional range finder is in a change state; and if the object to be positioned stops at a straight line section/ curve section of the track line, the distance information measured by the three-dimensional range finder is in a stable state within a period of time, and the three-dimensional range finder can send the distance information in the stable state to the monitoring sub-system.

Illustratively, as shown in Fig. 4, the distance information measured by the three-dimensional range finder 101 may include: LT, T1, T2 and k1, wherein T1 represents an actual length of a first train unit, LT represents a transverse distance of the railway train on the track line, T2 represents an actual length of a second train unit, and k1 represents a separation distance between the first train unit and the second train unit.

Alternatively, in one implementation, after the object to be positioned is stopped stably, a stop signal may be sent to the station vehicle in stock sub-system, and the stop signal may include the number of the track line on which the object to be positioned is stopped, so that the station vehicle in stock sub-system may send a start signal to the three-dimensional range finder; and the three-dimensional range finder begins scanning in a sector scanning area corresponding to the track line after receiving the start signal. Therefore, the distance information of the object to be positioned on the track line is detected.

A container loading and unloading operation requires that a container which is destined to the station is unloaded, a container which does not arrive at the station is kept on a railway vehicle which serves as a bearing body and can be loaded to run on a track line. Each railway vehicle is identified by an average vehicle number in advance, so that the container number of the container and the vehicle number of the railway vehicle loaded with the container can be related in advance, that is, in the process of the container loading and unloading operation, the number of the railway vehicle loaded with the container can be obtained according to the vehicle number of the container. The railway vehicle is a passive object in a non-train state and has no positioning and information exchange capability, namely, the positioning information of the railway vehicle cannot be obtained by the existing container loading and unloading operation. Therefore, the railway vehicle can be positioned by the positioning system for the railway vehicle provided by the invention, so that the stop position of the railway vehicle can be obtained, and the automatic container loading and unloading operation of the railway vehicle is realized, which saves the automatic loading and unloading operation time of the container.

The vehicle information may include running direction of the railway vehicle, detection time, number of a track line where the railway vehicle is located, vehicle type, vehicle number, marshalling sequence, etc. The running direction can be divided into an inbound direction and a outbound direction, the detection time of the railway vehicle is the time when the vehicle number ground recognition device detects the railway vehicle. Since all the railway vehicles in the railway train are continuously and tightly connected and the detection time difference of each railway vehicle is small and negligible, the detection time of all the railway vehicles in the railway train can be considered to be the same. The marshalling sequence may be an arrangement sequence of the railway vehicles in the railway train.

Various pieces of vehicle information of which the running direction is the inbound direction, the detection time is the same and the numbers of the track s are the same in the obtained vehicle information by the station vehicle in stock sub-system are integrated to obtain the information to be monitored corresponding to each track line line. The information to be monitored can only comprise the track line, the arrangement sequence and the vehicle number of each railway vehicle in a single railway vehicle/railway train, or the information to be monitored can also be the vehicle information of all the railway vehicles in the single railway vehicle/railway train; the object to be positioned can be either a single railway vehicle or a railway train; and when the object to be positioned is a railway train, each railway vehicle in the railway train is required to be positioned. For any track line, when the information to be monitored corresponding to the track line only comprises one vehicle number, the object to be positioned stopping on the track line is a single railway vehicle with the vehicle number in the information to be monitored; and when the information to be monitored corresponding to the track line comprises a plurality of vehicle numbers, the object to be positioned stopping on the track line is a railway train formed by a plurality of railway vehicles with vehicle numbers in the information to be monitored.

When a railway vehicle travels alone, it may be referred to as a shunting or a locomotive. When a plurality of railway vehicles travel in the form of a railway train, and a railway vehicle at a locomotive position in the railway train is not used to load a container, but tow a railway vehicle with other loaded containers to travel, it may be referred to as a towing locomotive or a locomotive, and a tail is a railway vehicle at a last position in the railway train.

According to one implementation mode, the monitoring sub-system is used, for each track line in the station, for using the obtained information to be monitored corresponding to the track line to determine a standard length of the object to be positioned stopping on the track line, specifically comprising:

For each track line in the station, when the information to be monitored corresponding to the track line only comprises one vehicle number, determining the standard length of a single railway vehicle with the vehicle number in the information to be monitored as the standard length of the object to be positioned stopping on the track line; and when the information to be monitored corresponding to the track line comprises a plurality of vehicle numbers, obtaining the standard lengths of a plurality of railway vehicles with the vehicle numbers in the information to be monitored, and calculating the sum of the standard lengths to serve as the standard length of the object to be positioned stopping on the track line.

The standard lengths of the railway vehicles with different models and vehicle numbers can be the same or different, and the monitoring sub-system can store the standard lengths of the railway vehicles of all models and the corresponding vehicle numbers in advance, so that the vehicle numbers of the objects to be positioned can be determined by utilizing the information to be monitored to obtain the standard lengths of the railway vehicles corresponding to the vehicle numbers. If only one vehicle number exists in the information to be monitored, the standard length of a single railway vehicle with the vehicle number in the information to be monitored is determined as the standard length of the object to be positioned; and if a plurality of vehicle numbers exist in the information to be monitored, the sum of the standard lengths of the railway vehicles corresponding to the vehicle numbers is calculated as the standard lengths of the objects to be positioned.

Specifically, the two ends of the track line are provided with reference points, the three-dimensional range finder can be provided outside the reference points, the outside being a side far away from the station; and when the object to be positioned stopping on the track line is separated into a plurality of train units, the object to be positioned is a railway train;

based on the standard length and the distance information of the object to be positioned on the track line, the monitoring sub-system calculates the railway mileage coordinate of the object to be positioned on the track line and finishes the positioning of the object to be positioned on the track line, specifically comprising:

obtaining railway mileage coordinates of two reference points at the two ends of the track line;
calculating the sum of the actual lengths of each train unit to obtain the actual length of the railway train on the track line;
calculating a corrected length of each railway vehicle in the railway train stopping on the track line according to the actual length and the standard length;
for each railway vehicle in the railway train stopping on the track, calculating the railway mileage coordinate of the railway vehicle according to the railway mileage coordinates of the two reference points, the transverse distance of the railway train on the track line, and the separation distance between each train unit in the railway train on the track and the corrected length of the railway vehicle; and after calculating the railway mileage coordinate of each railway vehicle in the railway train, finishing the positioning of the railway train on the track line.

The monitoring sub-system can store a yard electronic map of the station in advance, wherein the yard electronic map comprises various ground object graphic data (such as channels, culverts, bridges, overpasses and the like) of the station, railway mileage coordinates (with errors of centimeter level, meter level and the like) of devices on the track line, auxiliary facilities, track lines, turnout shunting lines, an annunciator, a fouling point indicator, an insulation joint, a bumper post, and other relevant attribute data of a platform; positions of a measurement point of the vehicle number ground recognition device, and three-dimensional range finder, etc. The reference point can be preset, and the reference point can be one of an annunciator, a fouling point indicator, an insulation joint and other devices on the track line, so that the monitoring sub-system can obtain the pre-stored railway mileage coordinates of the reference point.

For any track line, the information to be monitored corresponding to the track line further comprises an arrangement sequence of each railway vehicle in the railway train stopping on the track line, and the monitoring sub-system calculates a corrected length of each railway vehicle in the railway train by using the following formula:

$$li' = li + \Delta\varepsilon$$
;

$$\Delta\varepsilon = \frac{L1 - L2}{n}$$
;

$$L2 = lt + \sum_{i=1}^{n} li$$
;

wherein, $li'$ represents the corrected length of the railway vehicle at an $i^{th}$ position behind the locomotive of the railway train, $li$ represents the standard length of the railway vehicle at the $i^{th}$ position behind the locomotive of the railway train, $\Delta\varepsilon$ represents the correction amount, L1 represents the actual length of the railway train, L2 represents the standard length of the railway train, $lt$ represents the standard length of the locomotive, and n represents the total number of railway vehicles except a locomotive in the railway train. When the railway train is separated into a plurality of train units, the actual length of the railway train is the sum of the actual lengths of the train units; and when a railway train is not separated into a plurality of train units, the actual length of the railway train is the actual length of the entire train.

Each railway vehicle in the railway train is connected by a coupler with buffering and stretching functions. When the railway train is in a compressed state and a stretched state, the measured length of an inner side of the coupler is changed compared with the standard length, and the change is within a known limit range. Specifically, it can be considered that when L1 > L2, the railway train is in a stretched state; when a measured length L1 is less than a calculated length L2, the railway train is in a compressed state; and when the measured length L1 is equal to the calculated length L2 (or the difference value is within an allowable error range), the railway train is in a normal state.

The monitoring sub-system inquires the standard length lt of the locomotive and the standard length $li$ (i = 1, 2, 3 ... n) of the railway vehicle at an $i^{th}$ position behind the locomotive according to all railway vehicle models, vehicle numbers and arrangement sequences in the railway train on the tested track provided by the information to be monitored, so as to calculate the standard length $L2 = lt + \sum_{i=1}^{n} li$ $li$ of the railway train stopping on the track under test.

In order to improve the positioning accuracy, the difference value between the actual length and the standard length can be calculated to obtain a length error, and the length error is evenly distributed to all railway vehicles in the measurement range to obtain a distribution error of each railway vehicle, so that the positioning accuracy is corrected.

Based on the railway mileage coordinates of the two reference points and the corrected length of the railway vehicle, the monitoring sub-system can calculate the railway mileage coordinates of the railway vehicle;

Specifically, the railway mileage coordinates of the railway vehicle may be railway mileage coordinates of a geometric center point of the railway vehicle. In one implementation, assuming that the greater of the railway mileage coordinates and the lesser of the railway mileage coordinates in the two reference points are a first reference point and a second reference point, respectively; and the monitoring sub-system is used, for each railway vehicle in the railway train stopping on the track line when the locomotive in the railway train stopping on the track is close to the three-dimensional range finder, for calculating the railway mileage coordinate of the railway vehicle by using the railway mileage coordinates of the two reference points provided on the track line, the transverse distance of the railway train on the track line, the separation distance between each train unit of the railway train on the track line and the corrected length of the railway vehicle, specifically comprising:

calculating the distance between the railway vehicle and the locomotive of the railway vehicle as a spacing distance of the railway vehicle based on the corrected length of the railway vehicle and the position of the railway vehicle for each railway vehicle in the railway train stopping on the track line; when the three-dimensional range finder is close to the first reference point, obtaining the distance between the first reference point and the three-dimensional range finder, and calculating the railway mileage coordinate of the railway vehicle by adopting the following formula: d1=LT-r1, x=M1-d1-D; when the three-dimensional range finder is close to the second reference point, obtaining the distance between the second reference point and the three-dimensional range finder, and calculating the railway mileage coordinate of the railway vehicle by adopting the following formula: d2=LT-r2, x=M2+d2+D;

wherein, d1 and d2 respectively represent the distance between a locomotive and a first reference point and the distance between the locomotive and the second reference point, LT represents the transverse distance of the railway train on the track line, r1 and r2 respectively represent the distance between the first reference point and the three-dimensional range finder and the distance between the second reference point and the three-dimensional range finder, D represents the spacing distance of the railway vehicle, m1 and M2 represent the railway mileage coordinates of the first reference point and the second reference point respectively, and x represents the railway mileage coordinate of the railway vehicle.

The distance between the first reference point and the three-dimensional range finder and the distance between the second reference point and the three-dimensional range finder are also transverse distances. The monitoring sub-system obtains the distance between the first reference point and the three-dimensional range finder and the distance between the second reference point and the three-dimensional range finder by means of directly obtaining the distance between the first reference point and the three-dimensional range finder stored by itself and the distance between the second reference point and the three-dimensional range finder. Alternatively, it may also be that the three-dimensional range finder sends the distance between the first reference point and the three-dimensional range finder obtained by real-time measurement to the monitoring sub-system, and sends the distance between the second reference point and the three-dimensional range finder obtained by real-time measurement to the monitoring sub-system, so that the monitoring sub-system receives and obtains the distance between the first reference point and the three-dimensional range finder and the distance between the second reference point and the three-dimensional range finder.

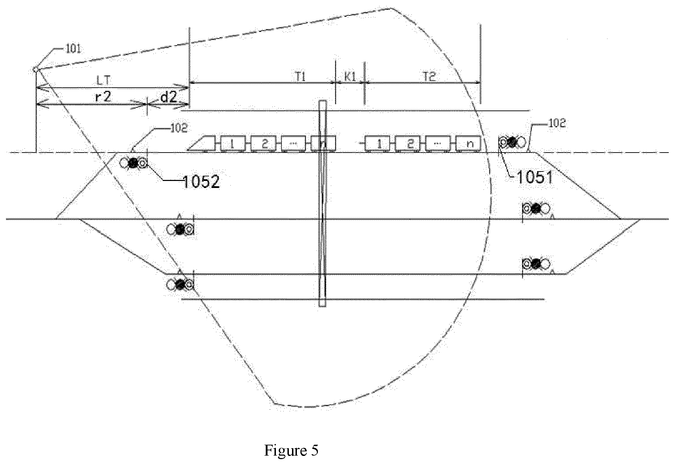

Specifically, as shown in Figs. 4 and 5, in Fig. 4, the three-dimensional range finder is close to the first reference point 1051, so that the railway mileage coordinates in the direction from the first reference point 1051 to the second reference point 1052 decrease progressively, and then x=M1-d1-D; in Fig. 5, the three-dimensional range finder is close to the second reference point 1052, so that the railway mileage coordinates in the direction from the second reference point 1052 to the first reference point 1051 increase incrementally, and then x= M2+d2+D.

The railway mileage coordinate of the railway vehicle can also be the railway mileage coordinate of the geometric center point of the railway vehicle, the spacing distance can be a distance from the geometric center point of the railway vehicle to an outermost edge point of the locomotive, and the outside is a side far away from the station. The monitoring sub-system calculates the spacing distance by using the following formula:

$$D_{ij}=lt+\sum_{r=1}^{i-1} lr' + \frac{1}{2} li' + \sum_{r=1}^{j-1} kr;$$

wherein, $D_{ij}$ represents the spacing distance of the railway vehicle at the $i^{th}$ position behind the locomotive and at the $j^{th}$ train unit, $lt$ represents the standard length of the locomotive, $lr'$ represents the corrected length of the railway vehicle at a $r^{th}$ position behind the locomotive, $li'$ represents the corrected length of the railway vehicle at the $i^{th}$ position behind the locomotive, and kj represents a separation distance between a $(j-1)^{th}$ train unit and the $j^{th}$ train unit.

In another implementation, the monitoring sub-system is used, for each railway vehicle in the railway train stopping on the track line when the tail in the railway train stopping on the track is close to the three-dimensional range finder, for calculating the railway mileage coordinate of the railway vehicle by using the railway mileage coordinates of the two reference points, the transverse distance of the railway train on the track line, the separation distance between each train unit of the railway train on the track line and the corrected length of the railway vehicle, specifically comprising:

calculating the distance between the railway vehicle and the locomotive of the railway vehicle as a spacing distance of the railway vehicle based on the corrected length of the railway vehicle and the position of the railway vehicle for each railway vehicle in the railway train stopping on the track line; when the three-dimensional range finder is close to the first reference point, obtaining the distance between the first reference point and the three-dimensional range finder, and calculating the railway mileage coordinate of the railway vehicle by adopting the following formula: d1=LT-r1, x=M1-d1-(LZ - D); when the three-dimensional range finder is close to the second reference point, obtaining the distance between the second reference point and the three-dimensional range finder, and calculating the railway mileage coordinate of the railway vehicle by adopting the following formula: d2=LT-r2, x=M2+d2+(LZ- D);

wherein, d1 and d2 respectively represent the distance between a locomotive and a first reference point and the distance between the locomotive and the second reference point, LT represents the transverse distance of the railway train on the track line, r1 and r2 respectively represent the distance between the first reference point and the three-dimensional range finder and the distance between the second reference point and the three-dimensional range finder, LZ represents a total length occupied by the railway train (being the sum of the separation distance between each train unit and the actual length of each train unit), D represents a spacing distance of the railway vehicle, M1 and M2 represent railway mileage coordinates of the first reference point and the second reference point, respectively, and x represents the railway mileage coordinate of the railway vehicle.

In yet another implementation mode, when the object to be positioned stopping on the track line is a single railway vehicle, the monitoring sub-system calculates the railway mileage coordinate of the object to be positioned on the track line based on the standard length and the distance information of the object to be positioned on the track line and finishes the positioning of the object to be positioned on the track line, specifically comprising:

obtaining railway mileage coordinates of two reference points at the two ends of the track line;
when the three-dimensional range finder is close to a first reference point, obtaining the distance between the first reference point and the three-dimensional range finder, and calculating a railway mileage coordinate of the single railway vehicle by adopting the following formula: d1=LT-r1, x=M1-d1-(w1+w2)/2; and when the three-dimensional range finder is close to the second reference point, obtaining the distance between the second reference point and the three-dimensional range finder, and calculating a railway mileage coordinate of the single railway vehicle by adopting the following formula: d2=LT-r2, x=M2+d2+(w1+w2)/2;
wherein, d1 and d2 respectively represent the distance between the single railway vehicle and the first reference point and the distance between the single railway vehicle and the second reference point, LT represents the transverse distance of the railway train on the track line, r1 and r2 respectively represent the distance between the first reference point and the three-dimensional range finder and the distance between the second reference point and the three-dimensional range finder, M1 and M2 respectively represent the railway mileage coordinates of the first reference point and the second reference point, w1 and w2 respectively represent the actual length and the standard length of the single railway vehicle, and x represents the railway mileage coordinate of the railway vehicle.

It will be appreciated that when the object to be located is a single railway vehicle, the standard length of the object to be located may not be corrected, and the railway mileage coordinates of the railway vehicle may also be the railway mileage coordinates of the geometric center point of the railway vehicle.

As can be seen, by applying the technical solutions provided by the embodiment of the invention, the vehicle information of each railway vehicle passing through the vehicle number ground recognition device can be obtained, and the various pieces of vehicle information, in the obtained vehicle information, which are detected at the same time and have the number of the track line are integrated to obtain the information to be monitored corresponding to each track line, so that the information to be monitored corresponding to each track line is utilized for each track line in the station to determine the standard length of the object to be positioned stopping on the track, calculate the railway mileage coordinate of the object to be positioned on the track line based on the standard length and the distance information of the object to be positioned on the track line, and finish the positioning of the object to be positioned on the track line. Because the standard length and the distance information contain specific values related to the position of the object to be positioned, the calculated railway mileage coordinate of the object to be positioned are specific values, so that the positioning accuracy of the object to be positioned is improved, the positioning of the object to be positioned on all the track line can be completed only by arranging a three-dimensional range finder at a station provided with a plurality of track lines, the cost is saved, and the system complexity is simplified. The positioning of each railway vehicle in each train unit can still be detected under the condition that the railway train is separated into a plurality of train units, and the positioning accuracy is further improved.

In one implementation mode, the monitoring sub-system is also used for converting the railway mileage coordinates of the objects to be positioned into geographic coordinates by an electronic map or other coordinate conversion algorithm inside the monitoring sub-system after calculating the railway mileage coordinate of the object to be positioned, wherein the geographic coordinates comprise GPS (Global Positioning System) coordinates, Beidou coordinates and the like, so as to obtain the information such as the vehicle number, the arrangement sequence and the accurate position of each railway vehicle on the measured track line.

Furthermore, after the accurate position coordinates of the railway vehicles corresponding to each vehicle number are obtained by the monitoring sub-system, a group of data information is formed by the accurate position coordinates of all the railway vehicles in a railway train, and the data information is uploaded to the automatic loading and unloading system of the railway station, so that the automatic loading and unloading system of the railway station can automatically load and unload the containers of the railway vehicles, which saves the automatic loading and unloading operation time of the containers.

The above mentioned are only preferred embodiments of the invention and not intended to limit the invention. Any modifications, equivalents, improvements and the like are intended to be included within the scope of this invention provided they come within the scope of this invention, as defined by the following claims.

**Claims**

1. A three-dimensional positioning system for railway vehicles (107), wherein the system is applied to a station and comprises

    a monitoring sub-system,
    a vehicle number recognition sub-system and
    a three-dimensional range finder (101),

    wherein:

    the vehicle number recognition sub-system comprises a plurality of vehicle number ground recognition devices (102), the station is provided with a plurality of track lines (103), two ends of each track line (103) are provided with the vehicle number ground recognition devices (102), and the three-dimensional range finder (101) is provided above the station;
    the vehicle number recognition sub-system is arranged to obtain vehicle information of each railway vehicle (107) passing through the vehicle number ground recognition device (102) and to send the obtained vehicle information of each railway vehicle (107) to the monitoring sub-system; the vehicle information comprising detection time and the number of the track line (103);
    the three-dimensional range finder (101) is arranged, for each track line in the station, to obtain distance information of an object to be positioned at rest on each track line (103), and to send the distance information to the monitoring sub-system; and
    the monitoring sub-system is arranged, for each track line (103) in the station, to use the obtained information to be monitored corresponding to the track line (103) to determine a standard length of the object to be positioned on the track using a vehicle number of the object, and based on the standard length and the distance information of the object to be positioned on the track line to finish the positioning of the object to be positioned on the track line (103), and to calculate a railway mileage coordinate of the object to be positioned on the track line (103); wherein the information to be monitored corresponding to the track line (103) is obtained by means of integrating various pieces of vehicle information, comprised in the vehicle information, which are detected at the same time and have the number of the track line (103),
    wherein the three-dimensional range finder (101) is arranged to:

    detect a transverse distance between one end, close to the three-dimensional range finder (101), of the object to be positioned at rest on the track line (103) and the three-dimensional range finder (101); and judge whether the object to be positioned is separated into a plurality of train units; and
    if so, detect a separation distance between each train unit and an actual length of each train unit, and taking the separation distance between each train unit, the actual length of each train unit and the detected transverse distance as distance information of the object to be positioned stopping on the track line (103);

if not, detect the actual length of the object to be positioned, and taking the actual length and the detected transverse distance as distance information of the object to be positioned on the track line (103).

2. The system according to claim 1, **characterized by** further comprising a station vehicle in stock sub-system, wherein the vehicle number recognition sub-system is configured to: send the obtained vehicle information of each railway vehicle to a station vehicle in stock sub-system, so that the station vehicle in stock sub-system integrates various pieces of vehicle information, in the obtained vehicle information, which are detected at the same time and have the number of the track line (103) to obtain the information to be monitored corresponding to each track line (103), and send the information to be monitored corresponding to each track line (103) to the monitoring sub-system.

3. The system according to claim 2, **characterized in that** the monitoring sub-system is configured:
for each track line (103) in the station, when the information to be monitored corresponding to the track line (103) only comprises one vehicle number, to determine the standard length of a single railway vehicle with the vehicle number in the information to be monitored as the standard length of the object to be positioned stopping on the track line (103); and when the information to be monitored corresponding to the track line (103) comprises a plurality of vehicle numbers, to obtain the standard lengths of a plurality of railway vehicles (107) with the vehicle numbers in the information to be monitored, and to calculate the sum of the standard lengths to serve as the standard length of the object to be positioned stopping on the track line (103).

4. The system according to claim 2, **characterized in that** the two ends of the track line (103) are provided with reference points, the three-dimensional range finder (101) is provided outside the reference points, the outside being a side far away from the station; and when the object to be positioned stopping on the track line (103) is separated into a plurality of train units, the object to be positioned is a railway train; based on the standard length and the distance information of the object to be positioned on the track line (103), the monitoring sub-system is configured to calculate the railway mileage coordinate of the object to be positioned on the track line (103) and finishes the positioning of the object to be positioned on the track line (103) by:

obtaining railway mileage coordinates of two reference points at the two ends of the track line (103);
calculating the sum of the actual lengths of each train unit to obtain the actual length of the railway train on the track line (103);
calculating a corrected length of each railway vehicle (107) in the railway train on the track line (103) according to the actual length and the standard length;
for each railway vehicle (107) in the railway train stopping on the track, calculating the railway mileage coordinate of the railway vehicle (107) according to the railway mileage coordinates of the two reference points, the transverse distance of the railway train on the track line (103), and the separation distance between each train unit in the railway train on the track and the corrected length of the railway vehicle (107); and after calculating the railway mileage coordinate of each railway vehicle (107) in the railway train, finishing the positioning of the railway train on the track line (103).

5. The system according to claim 4, **characterized in that** the information to be monitored corresponding to the track line (103) further comprises an arrangement sequence of each railway vehicle (107) in the railway train stopping on the track line (103), and the monitoring sub-system is configured to calculate a corrected length of each railway vehicle (107) in the railway train by using the following formula:

$$li' = li + \Delta\varepsilon ;$$

$$\Delta\varepsilon = \frac{L1 - L2}{n} ;$$

$$L2 = lt + \sum_{i=1}^{n} li ;$$

wherein, $li'$ represents the corrected length of the railway vehicle at an $i^{th}$ position behind the locomotive (106) of the railway train, *li* represents the standard length of the railway vehicle (107) at the $i^{th}$ position behind the locomotive (106) of the railway train, $\Delta\varepsilon$ represents the correction amount, L1 represents the actual length of the railway train, L2 represents the standard length of the railway train, *lt* represents the standard length of the locomotive (106), and n represents the total number of railway vehicles (107) except a locomotive (106) in the railway train.

6. The system according to claim 4, **characterized in that** the greater of the railway mileage coordinates and the lesser of the railway mileage coordinates in the two reference points are a first reference point and a second reference point, respectively; and the monitoring sub-system is configured to, for each railway vehicle (107) in the railway train stopping on the track line (103) when the locomotive (106) in the railway train stopping on the track is close to the three-dimensional range finder (101), for calculating the railway mileage coordinate of the railway vehicle (107) by using the railway mileage coordinates of the two reference points, the transverse distance of the railway train on the track line (103), the separation distance between each train unit of the railway train on the track line (103) and the corrected length of the railway vehicle, by:

calculating the distance between the railway vehicle (107) and the locomotive (106) of the railway vehicle (107) as a spacing distance of the railway vehicle (107) based on the corrected length of the railway vehicle (107) and the position of the railway vehicle (107) for each railway vehicle (107) in the railway train stopping on the track line (103); when the three-dimensional range finder (101) is close to the first reference point, obtaining the distance between the first reference point and the three-dimensional range finder (101), and calculating the railway mileage coordinate of the railway vehicle (107) by adopting the following formula: d1=LT-r1, x=M1-d1-D; when the three-dimensional range finder (101) is close to the second reference point, obtaining the distance between the second reference point and the three-dimensional range finder (101), and calculating the railway mileage coordinate of the railway vehicle by adopting the following formula: d2=LT-r2, x=M2+d2+D;
wherein, d1 and d2 respectively represent the distance between a locomotive (106) and a first reference point and the distance between the locomotive (106) and the second reference point, LT represents the transverse distance of the railway train on the track line (103), r1 and r2 respectively represent the distance between the first reference point and the three-dimensional range finder (101) and the distance between the second reference point and the three-dimensional range finder (101), D represents the spacing distance of the railway vehicle (107), m1 and M2 represent the railway mileage coordinates of the first reference point and the second reference point respectively, and x represents the railway mileage coordinate of the railway vehicle (107).

7. The system according to claim 6, **characterized in that** when the monitoring sub-system is configured to calculate the spacing distance using the following formula:

$$D_{ij}=lt+\sum_{r=1}^{i-1} lr' + \frac{1}{2} li' + \sum_{r=1}^{j-1} kr;$$

wherein, $D_{ij}$ represents the spacing distance of the railway vehicle (107) at the $i^{th}$ position behind the locomotive (106) and at the $j^{th}$ train unit, *lt* represents the standard length of the locomotive (106), *lr'* represents the corrected length of the railway vehicle (107) at a $r^{th}$ position behind the locomotive (106), *li'* represents the corrected length of the railway vehicle (107) at the $i^{th}$ position behind the locomotive (106), and kj represents a separation distance between a $(j-1)^{th}$ train unit and the $j^{th}$ train unit.

8. The system according to claim 1, **characterized in that** the two ends of each track line (103) are provided with reference points, and the three-dimensional range finder (101) is provided outside the reference points, the outside being a side far away from the station; when the object to be positioned stopping on the track line (103) is a single railway vehicle (107), the monitoring sub-system is configured to calculate the railway mileage coordinate of the object to be positioned on the track line (103) based on the standard length and the distance information of the object to be positioned on the track line (103) and finishes the positioning of the object to be positioned on the track line (103), by:

obtaining railway mileage coordinates of two reference points at the two ends of the track line;
when the three-dimensional range finder (101) is close to a first reference point, obtaining the distance between the first reference point and the three-dimensional range finder (101), and calculating a railway mileage coordinate of the single railway vehicle (107) by adopting the following formula: d1=LT-r1, x=M1-d1-(w1+w2)/2; and when the three-dimensional range finder (101) is close to the second reference point, obtaining the distance between the second reference point and the three-dimensional range finder (101), and calculating a railway mileage coordinate of the single railway vehicle (107) by adopting the following formula:

d2=LT-r2, x=M2+d2+(w1+w2)/2;

wherein, the first reference point and the second reference point are respectively the greater of the railway mileage coordinates and the lesser of the railway mileage coordinates in the two reference points, d1 and d2 respectively represent the distance between the single railway vehicle (107) and the first reference point and the distance between the single railway vehicle (107) and the second reference point, LT represents the transverse distance of the railway train on the track line (103), r1 and r2 respectively represent the distance between the first reference point and the three-dimensional range finder (101) and the distance between the second reference point and the three-dimensional range finder, M1 and M2 respectively represent the railway mileage coordinates of the first reference point and the second reference point, W1 and W2 respectively represent the actual length and the standard length of the single railway vehicle (107), and x represents the railway mileage coordinates of the railway vehicle (107).

9. The system according to claim 1, **characterized in that** the monitoring sub-system is further configured to:
convert the railway mileage coordinate of the object to be positioned into a geographic coordinate after calculating the railway mileage coordinate of the object to be positioned.

**Patentansprüche**

1. Ein dreidimensionales Positionierungssystem für Schienenfahrzeuge (107), wobei das System auf einen Bahnhof angewandt ist und Folgendes beinhaltet:

ein Überwachungsteilsystem,
ein Fahrzeugnummernerkennungsteilsystem und
einen dreidimensionalen Entfernungsmesser (101),
wobei:

das Fahrzeugnummernerkennungsteilsystem eine Vielzahl von Fahrzeugnummernerkennungs-Bodenvorrichtungen (102) beinhaltet, der Bahnhof mit einer Vielzahl von Gleisabschnitten (103) versehen ist, zwei Enden jedes Gleisabschnitts (103) mit den Fahrzeugnummernerkennungs-Bodenvorrichtungen (102) versehen sind und der dreidimensionale Entfernungsmesser (101) über dem Bahnhof bereitgestellt ist;
das Fahrzeugnummernerkennungsteilsystem dazu eingerichtet ist, Fahrzeuginformationen jedes durch die Fahrzeugnummernerkennungs-Bodenvorrichtung (102) gelangenden Schienenfahrzeugs (107) zu beschaffen und die beschafften Fahrzeuginformationen jedes Schienenfahrzeugs (107) an das Überwachungsteilsystem zu senden; wobei die Fahrzeuginformationen die Erfassungszeit und die Nummer des Gleisabschnitts (103) beinhalten;
der dreidimensionale Entfernungsmesser (101) dazu eingerichtet ist, für jeden Gleisabschnitt in dem Bahnhof Entfernungsinformationen eines ruhend auf jedem Gleisabschnitt (103) zu positionierenden Objekts zu beschaffen und die Entfernungsinformationen an das Überwachungsteilsystem zu senden; und
das Überwachungsteilsystem dazu eingerichtet ist, für jeden Gleisabschnitt (103) in dem Bahnhof die zu überwachenden, dem Gleisabschnitt (103) entsprechenden beschafften Informationen zu verwenden, um eine Standardlänge des auf dem Gleis zu positionierenden Objekts unter Verwendung einer Fahrzeugnummer des Objekts zu bestimmen und basierend auf der Standardlänge und den Entfernungsinformationen des auf dem Gleisabschnitt zu positionierenden Objekts die Positionierung des auf dem Gleisabschnitt (103) zu positionierenden Objekts fertigzustellen und eine Schienenstreckenkoordinate des auf dem Gleisabschnitt (103) zu positionierenden Objekts zu berechnen; wobei die zu überwachenden, dem Gleisabschnitt (103) entsprechenden Informationen mittels Integrieren verschiedener in den Fahrzeuginformationen beinhalteten Fahrzeugeinzelinformationen beschafft werden, die zur selben Zeit erfasst werden und die Nummer des Gleisabschnitts (103) aufweisen,
wobei der dreidimensionale Entfernungsmesser (101) zu Folgendem eingerichtet ist:

Erfassen einer Querentfernung zwischen einem Ende nahe dem dreidimensionalen Entfernungsmesser (101) des ruhend auf dem Gleisabschnitt (103) zu positionierenden Objekts und dem dreidimensionalen Entfernungsmesser (101); und Beurteilen, ob das zu positionierende Objekt in eine Vielzahl von Zugeinheiten getrennt ist; und
falls ja, Erfassen eines Abstands zwischen jeder Zugeinheit und einer Ist-Länge jeder Zugeinheit und Übernehmen des Abstands zwischen jeder Zugeinheit, der Ist-Länge jeder Zugeinheit und der erfassten Querentfernung als Entfernungsinformationen des anhaltend auf dem Gleisabschnitt (103) zu positionierenden Objekts;

falls nicht, Erfassen der Ist-Länge des zu positionierenden Objekts und Übernehmen der Ist-Länge und der erfassten Querentfernung als Entfernungsinformationen des auf dem Gleisabschnitt (103) zu positionierenden Objekts.

2. System gemäß Anspruch 1, **dadurch gekennzeichnet, dass** es ferner ein Bahnhofs-Fahrzeugbestandteilsystem beinhaltet, wobei das Fahrzeugnummernerkennungsteilsystem zu Folgendem konfiguriert ist:

Senden der beschafften Fahrzeuginformationen jedes Schienenfahrzeugs an ein Bahnhofs-Fahrzeugbestandteilsystem, sodass das Bahnhofs-Fahrzeugbestandteilsystem verschiedene Fahrzeugeinzelinformationen in die beschafften Fahrzeuginformationen integriert, die zur selben Zeit erfasst werden und die Nummer des Gleisabschnitts (103) aufweisen, um die jedem Gleisabschnitt (103) entsprechenden, zu überwachenden Informationen zu beschaffen, und Senden der jedem Gleisabschnitt (103) entsprechenden, zu überwachenden Informationen an das Überwachungsteilsystem.

3. System gemäß Anspruch 2, **dadurch gekennzeichnet, dass** das Überwachungsteilsystem zu Folgendem konfiguriert ist:

für jeden Gleisabschnitt (103) in dem Bahnhof, wenn die dem Gleisabschnitt (103) entsprechenden, zu überwachenden Informationen nur eine Fahrzeugnummer beinhalten, Bestimmen der Standardlänge eines einzelnen Schienenfahrzeugs mit der Fahrzeugnummer in den zu überwachenden Informationen als die Standardlänge des anhaltend auf dem Gleisabschnitt (103) zu positionierenden Objekts; und, wenn die dem Gleisabschnitt (103) entsprechenden, zu überwachenden Informationen eine Vielzahl von Fahrzeugnummern beinhalten, Beschaffen der Standardlängen einer Vielzahl von Schienenfahrzeugen (107) mit den Fahrzeugnummern in den zu überwachenden Informationen und Berechnen der Summe der Standardlängen, um als die Standardlänge des anhaltend auf dem Gleisabschnitt (103) zu positionierenden Objekts zu dienen.

4. System gemäß Anspruch 2, **dadurch gekennzeichnet, dass** die zwei Enden des Gleisabschnitts (103) mit Bezugspunkten versehen sind, der dreidimensionale Entfernungsmesser (101) auf der Außenseite der Bezugspunkte bereitgestellt ist, wobei die Außenseite eine Seite weit entfernt von dem Bahnhof ist; und, wenn das anhaltend auf dem Gleisabschnitt (103) zu positionierende Objekt in eine Vielzahl von Zugeinheiten getrennt ist, das zu positionierende Objekt ein Schienenzug ist; das Überwachungsteilsystem dazu konfiguriert ist, basierend auf der Standardlänge und den Entfernungsinformationen des auf dem Gleisabschnitt (103) zu positionierenden Objekts die Schienenstreckenkoordinate des auf dem Gleisabschnitt (103) zu positionierenden Objekts zu berechnen, und das Positionieren des auf dem Gleisabschnitt (103) zu positionierenden Objekts durch Folgendes abschließt:

Beschaffen von Schienenstreckenkoordinaten von zwei Bezugspunkten an den zwei Enden des Gleisabschnitts (103);

Berechnen der Summe der Ist-Längen jeder Zugeinheit, um die Ist-Länge des Schienenzugs auf dem Gleisabschnitt (103) zu beschaffen;

Berechnen einer korrigierten Länge jedes Schienenfahrzeugs (107) in dem Schienenzug auf dem Gleisabschnitt (103) gemäß der Ist-Länge und der Standardlänge;

für jedes Schienenfahrzeug (107) in dem auf dem Gleis anhaltenden Schienenzug, Berechnen der Schienenstreckenkoordinate des Schienenzugs (107) gemäß den Schienenstreckenkoordinaten der zwei Bezugspunkte, der Querentfernung des Schienenzugs auf dem Gleisabschnitt (103) und dem Abstand zwischen jeder Zugeinheit in dem Schienenzug auf dem Gleis und der korrigierten Länge des Schienenfahrzeugs (107); und, nach dem Berechnen der Schienenstreckenkoordinate jedes Schienenfahrzeugs (107) in dem Schienenzug, Fertigstellen der Positionierung des Schienenzugs auf dem Gleisabschnitt (103).

5. System gemäß Anspruch 4, **dadurch gekennzeichnet, dass** die die dem Gleisabschnitt (103) entsprechenden, zu überwachenden Informationen ferner eine Anordnungsreihenfolge jedes Schienenfahrzeugs (107) in dem auf dem Gleisabschnitt (103) anhaltenden Schienenzug beinhalten und das Überwachungsteilsystem dazu konfiguriert ist, eine korrigierte Länge jedes Schienenfahrzeugs (107) in dem Schienenzug durch Verwenden der folgenden Formel zu berechnen:

$$li' = li + \Delta\varepsilon$$

$$\Delta\varepsilon = \frac{L1 - L2}{n} \; ;$$

$$L2 = lt + \sum_{i=1}^{n} li ;$$

wobei $li'$ für die korrigierte Länge des Schienenfahrzeugs an einer i-ten Position hinter der Lokomotive (106) des Schienenzugs steht, $li$ für die Standardlänge des Schienenfahrzeugs (107) an der i-ten Position hinter der Lokomotive (106) des Schienenzugs steht, $\Delta\varepsilon$ für den Korrekturbetrag steht, L1 für die Ist-Länge des Schienenzugs steht, L2 für die Standardlänge des Schienenzugs steht, $lt$ für die Standardlänge der Lokomotive (106) steht und n für die Gesamtzahl von Schienenfahrzeugen (107) außer einer Lokomotive (106) in dem Schienenzug steht.

6. System gemäß Anspruch 4, **dadurch gekennzeichnet, dass** die größeren der Schienenstreckenkoordinaten und die kleineren der Schienenstreckenkoordinaten in den zwei Bezugspunkten ein erster Bezugspunkt bzw. ein zweiter Bezugspunkt sind; und das Überwachungsteilsystem dazu konfiguriert ist, für jedes Schienenfahrzeug (107) in dem auf dem Gleisabschnitt (103) anhaltenden Schienenzug, wenn die Lokomotive (106) in dem auf dem Gleis anhaltenden Schienenzug nahe dem dreidimensionalen Entfernungsmesser (101) ist, zum Berechnen der Schienenstreckenkoordinate des Schienenfahrzeugs (107) durch Verwenden der Schienenstreckenkoordinaten der zwei Bezugspunkte, der Querentfernung des Schienenzugs auf dem Gleisabschnitt (103), des Abstands zwischen jeder Zugeinheit des Schienenzugs auf dem Gleisabschnitt (103) und der korrigierten Länge des Schienenfahrzeugs durch Folgendes:

   Berechnen der Entfernung zwischen dem Schienenfahrzeug (107) und der Lokomotive (106) des Schienenfahrzeugs (107) als eine Abstandsentfernung des Schienenfahrzeugs (107) basierend auf der korrigierten Länge des Schienenfahrzeugs (107) und der Position des Schienenfahrzeugs (107) für jedes Schienenfahrzeug (107) in dem auf dem Gleisabschnitt (103) anhaltenden Schienenzug; wenn der dreidimensionale Entfernungsmesser (101) nahe dem ersten Bezugspunkt ist,
   Beschaffen der Entfernung zwischen dem ersten Bezugspunkt und dem dreidimensionalen Entfernungsmesser (101) und Berechnen der Schienenstreckenkoordinate des Schienenfahrzeugs (107) durch Übernehmen der folgenden Formel: d1 = LT - r1, x = M1 - d1 - D; wenn der dreidimensionale Entfernungsmesser (101) nahe dem zweiten Bezugspunkt ist, Beschaffen der Entfernung zwischen dem zweiten Bezugspunkt und dem dreidimensionalen Entfernungsmesser (101) und Berechnen der Schienenstreckenkoordinate des Schienenfahrzeugs durch Übernehmen der folgenden Formel: d2 = LT - r2, x = M2 + d2 + D;
   wobei d1 und d2 für die Entfernung zwischen einer Lokomotive (106) und einem ersten Bezugspunkt bzw. der Entfernung zwischen der Lokomotive (106) und dem zweiten Bezugspunkt stehen, LT für die Querentfernung des Schienenzugs auf dem Gleisabschnitt (103) steht, r1 und r2 für die Entfernung zwischen dem ersten Bezugspunkt und dem dreidimensionalen Entfernungsmesser (101) bzw. die Entfernung zwischen dem zweiten Bezugspunkt und dem dreidimensionalen Entfernungsmesser (101) stehen, D für die Abstandsentfernung des Schienenfahrzeugs (107) steht, m1 und M2 für die Schienenstreckenkoordinaten des ersten Bezugspunkts bzw. des zweiten Bezugspunkts stehen und x für die Schienenstreckenkoordinate des Schienenfahrzeugs (107) steht.

7. System gemäß Anspruch 6, **dadurch gekennzeichnet, dass**, wenn das Überwachungsteilsystem dazu konfiguriert ist, die Abstandsentfernung unter Verwendung der folgenden Formel zu berechnen:

$$D_{ij} = lt + \sum_{r=1}^{i-1} lr' + \frac{1}{2} li' + \sum_{r=1}^{j-1} kr ;$$

wobei $D_{ij}$ für die Abstandsentfernung des Schienenfahrzeugs (107) an der i-ten Position hinter der Lokomotive (106) und an der j-ten Zugeinheit steht, $lt$ für die Standardlänge der Lokomotive (106) steht, $lr'$ für die korrigierte Länge des Schienenfahrzeugs (107) an einer r-ten Position hinter der Lokomotive (106) steht, $li'$ für die korrigierte Länge des Schienenfahrzeugs (107) an der i-ten Position hinter der Lokomotive (106) steht und kj für eine Abstandsentfernung zwischen einer (j -1)-ten Zugeinheit und der j-ten Zugeinheit steht.

8. System gemäß Anspruch 1, **dadurch gekennzeichnet, dass** die zwei Enden jedes Gleisabschnitts (103) mit Bezugspunkten versehen sind und der dreidimensionale Entfernungsmesser (101) auf der Außenseite der Bezugspunkte bereitgestellt ist, wobei die Außenseite eine Seite weit entfernt von dem Bahnhof ist; wenn das anhaltend auf dem Gleisabschnitt (103) zu positionierende Objekt ein einzelnes Schienenfahrzeug (107) ist, das Überwachungsteilsystem dazu konfiguriert ist, die Schienenstreckenkoordinate des auf dem Gleis (103) zu positionierenden Objekts basierend auf der Standardlänge und den Entfernungsinformationen des auf dem Gleisabschnitt (103) zu positionierenden Objekts zu berechnen, und das Positionieren des auf dem Gleisabschnitt (103) zu positionierenden Objekts durch Folgendes fertigstellt:

Beschaffen von Schienenstreckenkoordinaten von zwei Bezugspunkten an den zwei Enden des Gleisabschnitts; wenn der dreidimensionale Entfernungsmesser (101) nahe einem ersten Bezugspunkt ist, Beschaffen der Entfernung zwischen dem ersten Bezugspunkt und dem dreidimensionalen Entfernungsmesser (101) und Berechnen einer Schienenstreckenkoordinate des einzelnen Schienenfahrzeugs (107) durch Übernehmen der folgenden Formel: $d1 = LT - r1$, $x = M1 - d1 - (w1 + w2)/2$; und, wenn der dreidimensionale Entfernungsmesser (101) nahe dem zweiten Bezugspunkt ist, Beschaffen der Entfernung zwischen dem zweiten Bezugspunkt und dem dreidimensionalen Entfernungsmesser (101) und Berechnen einer Schienenstreckenkoordinate des einzelnen Schienenfahrzeugs (107) durch Übernehmen der folgenden Formel: $d2 = LT - r2$, $x = M2 + d2 + (w1 + w2)2$; wobei der erste Bezugspunkt und der zweite Bezugspunkt die größeren der Schienenstreckenkoordinaten bzw. die kleineren der Schienenstreckenkoordinaten in den zwei Bezugspunkten sind, d1 und d2 für die Entfernung zwischen dem einzelnen Schienenfahrzeug (107) und dem ersten Bezugspunkt bzw. die Entfernung zwischen dem einzelnen Schienenfahrzeug (107) und dem zweiten Bezugspunkt stehen, LT für die Querentfernung des Schienenzugs auf dem Gleisabschnitt (103) steht, r1 und r2 für die Entfernung zwischen dem ersten Bezugspunkt und dem dreidimensionalen Entfernungsmesser (101) bzw. die Entfernung zwischen dem zweiten Bezugspunkt und dem dreidimensionalen Entfernungsmesser stehen, M1 und M2 für die Schienenstreckenkoordinaten des ersten Bezugspunkts bzw. des zweiten Bezugspunkts stehen, W1 und W2 für die Ist-Länge bzw. die Standardlänge des einzelnen Schienenfahrzeugs (107) stehen und x für die Schienenstreckenkoordinaten des Schienenfahrzeugs (107) steht.

9. System gemäß Anspruch 1, **dadurch gekennzeichnet, dass** das Überwachungsteilsystem ferner zu Folgendem konfiguriert ist:
Umwandeln der Schienenstreckenkoordinate des zu positionierenden Objekts in eine geographische Koordinate nach dem Berechnen der Schienenstreckenkoordinate des zu positionierenden Objekts.

**Revendications**

1. Un système de positionnement tridimensionnel pour véhicules ferroviaires (107), où le système est appliqué à une gare et comprend

un sous-système de surveillance,
un sous-système de reconnaissance de numéro de véhicule et
un télémètre tridimensionnel (101),
où :

le sous-système de reconnaissance de numéro de véhicule comprend une pluralité de dispositifs terrestres de reconnaissance de numéro de véhicule (102), la gare est dotée d'une pluralité de tronçons de voie (103), deux extrémités de chaque tronçon de voie (103) sont dotées des dispositifs terrestres de reconnaissance de numéro de véhicule (102), et le télémètre tridimensionnel (101) est situé au-dessus de la gare ;
le sous-système de reconnaissance de numéro de véhicule est conçu pour obtenir des informations de véhicule relatives à chaque véhicule ferroviaire (107) traversant le dispositif terrestre de reconnaissance de numéro de véhicule (102) et pour envoyer les informations de véhicule obtenues relatives à chaque véhicule ferroviaire (107) au sous-système de surveillance ; les informations de véhicule comprenant l'instant de détection et le numéro du tronçon de voie (103) ;
le télémètre tridimensionnel (101) est conçu, pour chaque tronçon de voie dans la gare, pour obtenir des informations de distance relatives à un objet à positionner au repos sur chaque tronçon de voie (103), et pour envoyer les informations de distance au sous-système de surveillance ; et
le sous-système de surveillance est conçu, pour chaque tronçon de voie (103) dans la gare, pour utiliser les informations obtenues à surveiller correspondant au tronçon de voie (103) afin de déterminer une longueur standard de l'objet à positionner sur la voie à l'aide d'un numéro de véhicule de l'objet, et sur la base de la longueur standard et des informations de distance relatives à l'objet à positionner sur le tronçon de voie pour finir le positionnement de l'objet à positionner sur le tronçon de voie (103), et pour calculer une coordonnée de kilométrage ferroviaire de l'objet à positionner sur le tronçon de voie (103) ; où les informations à surveiller correspondant au tronçon de voie (103) sont obtenues à l'aide d'une intégration de divers éléments d'informations de véhicule, compris dans les informations de véhicule, qui sont détectés au même instant et ont le numéro du tronçon de voie (103),
où le télémètre tridimensionnel (101) est conçu pour :

> détecter une distance transversale entre une extrémité, proche du télémètre tridimensionnel (101), de l'objet à positionner au repos sur le tronçon de voie (103) et le télémètre tridimensionnel (101) ; et évaluer si l'objet à positionner est séparé en une pluralité d'unités de train ; et
> si tel est le cas, détecter une distance de séparation entre chaque unité de train et une longueur réelle de chaque unité de train, et prendre la distance de séparation entre chaque unité de train, la longueur réelle de chaque unité de train et la distance transversale détectée comme informations de distance relatives à l'objet à positionner s'arrêtant sur le tronçon de voie (103) ;
> dans le cas contraire, détecter la longueur réelle de l'objet à positionner, et prendre la longueur réelle et la distance transversale détectée comme informations de distance relatives à l'objet à positionner sur le tronçon de voie (103).

2. Le système selon la revendication 1, **caractérisé en ce qu'**il comprend en outre un sous-système de véhicule en parc de gare, où le sous-système de reconnaissance de numéro de véhicule est configuré pour :
envoyer les informations de véhicule obtenues relatives à chaque véhicule ferroviaire à un sous-système de véhicule en parc de gare, de telle sorte que le sous-système de véhicule en parc de gare intègre divers éléments d'informations de véhicule, dans les informations de véhicule obtenues, qui sont détectés au même instant et ont le numéro du tronçon de voie (103) pour obtenir les informations à surveiller correspondant à chaque tronçon de voie (103), et envoyer les informations à surveiller correspondant à chaque tronçon de voie (103) au sous-système de surveillance.

3. Le système selon la revendication 2, **caractérisé en ce que** le sous-système de surveillance est configuré :
pour chaque tronçon de voie (103) dans la gare, lorsque les informations à surveiller correspondant au tronçon de voie (103) comprennent seulement un numéro de véhicule, pour déterminer la longueur standard d'un seul véhicule ferroviaire pourvu du numéro de véhicule dans les informations à surveiller comme la longueur standard de l'objet à positionner s'arrêtant sur le tronçon de voie (103) ; et lorsque les informations à surveiller correspondant au tronçon de voie (103) comprennent une pluralité de numéros de véhicule, pour obtenir les longueurs standard d'une pluralité de véhicules ferroviaires (107) pourvus des numéros de véhicule dans les informations à surveiller, et pour calculer la somme des longueurs standard pour servir de longueur standard de l'objet à positionner s'arrêtant sur le tronçon de voie (103).

4. Le système selon la revendication 2, **caractérisé en ce que** les deux extrémités du tronçon de voie (103) sont dotées de points de référence, le télémètre tridimensionnel (101) est situé à l'extérieur des points de référence, l'extérieur étant un côté loin de la gare ; et lorsque l'objet à positionner s'arrêtant sur le tronçon de voie (103) est séparé en une pluralité d'unités de train, l'objet à positionner est un train ferroviaire ; sur la base de la longueur standard et des informations de distance relatives à l'objet à positionner sur le tronçon de voie (103), le sous-système de surveillance est configuré pour calculer la coordonnée de kilométrage ferroviaire de l'objet à positionner sur le tronçon de voie (103) et finit le positionnement de l'objet à positionner sur le tronçon de voie (103) par :

> obtention de coordonnées de kilométrage ferroviaire de deux points de référence aux deux extrémités du tronçon de voie (103) ;
> calcul de la somme des longueurs réelles de chaque unité de train pour obtenir la longueur réelle du train ferroviaire sur le tronçon de voie (103) ;
> calcul d'une longueur corrigée de chaque véhicule ferroviaire (107) dans le train ferroviaire sur le tronçon de voie (103) conformément à la longueur réelle et à la longueur standard ;
> pour chaque véhicule ferroviaire (107) dans le train ferroviaire s'arrêtant sur la voie, calcul de la coordonnée de kilométrage ferroviaire du véhicule ferroviaire (107) conformément aux coordonnées de kilométrage ferroviaire des deux points de référence, à la distance transversale du train ferroviaire sur le tronçon de voie (103), et à la distance de séparation entre chaque unité de train dans le train ferroviaire sur la voie et à la longueur corrigée du véhicule ferroviaire (107) ; et après calcul de la coordonnée de kilométrage ferroviaire de chaque véhicule ferroviaire (107) dans le train ferroviaire, fin du positionnement du train ferroviaire sur le tronçon de voie (103).

**5.** Le système selon la revendication 4, **caractérisé en ce que** les informations à surveiller correspondant au tronçon de voie (103) comprennent en outre une séquence d'agencement de chaque véhicule ferroviaire (107) dans le train ferroviaire s'arrêtant sur le tronçon de voie (103), et le sous-système de surveillance est configuré pour calculer une longueur corrigée de chaque véhicule ferroviaire (107) dans le train ferroviaire à l'aide de la formule suivante :

$$li' = li + \Delta\varepsilon$$

$$\Delta\varepsilon = \frac{L1 - L2}{n}$$

$$L2 = lt + \sum_{i=1}^{n} li$$

où li' représente la longueur corrigée du véhicule ferroviaire à une $i^{ème}$ position derrière la locomotive (106) du train ferroviaire, *li* représente la longueur standard du véhicule ferroviaire (107) à la $i^{ème}$ position derrière la locomotive (106) du train ferroviaire, $\Delta\varepsilon$ représente la quantité de correction, L1 représente la longueur réelle du train ferroviaire, L2 représente la longueur standard du train ferroviaire, *lt* représente la longueur standard de la locomotive (106), et n représente le nombre total de véhicules ferroviaires (107) excepté une locomotive (106) dans le train ferroviaire.

**6.** Le système selon la revendication 4, **caractérisé en ce que** la plus grande des coordonnées de kilométrage ferroviaire et la plus petite des coordonnées de kilométrage ferroviaire dans les deux points de référence sont un premier point de référence et un second point de référence, respectivement ; et le sous-système de surveillance est configuré pour, pour chaque véhicule ferroviaire (107) dans le train ferroviaire s'arrêtant sur le tronçon de voie (103) lorsque la locomotive (106) dans le train ferroviaire s'arrêtant sur la voie est proche du télémètre tridimensionnel (101), pour le calcul de la coordonnée de kilométrage ferroviaire du véhicule ferroviaire (107) à l'aide des coordonnées de kilométrage ferroviaire des deux points de référence, de la distance transversale du train ferroviaire sur le tronçon de voie (103), de la distance de séparation entre chaque unité de train du train ferroviaire sur le tronçon de voie (103) et de la longueur corrigée du véhicule ferroviaire, par :

calcul de la distance entre le véhicule ferroviaire (107) et la locomotive (106) du véhicule ferroviaire (107) comme distance d'espacement du véhicule ferroviaire (107) sur la base de la longueur corrigée du véhicule ferroviaire (107) et de la position du véhicule ferroviaire (107) pour chaque véhicule ferroviaire (107) dans le train ferroviaire s'arrêtant sur le tronçon de voie (103) ; lorsque le télémètre tridimensionnel (101) est proche du premier point de référence, obtention de la distance entre le premier point de référence et le télémètre tridimensionnel (101), et calcul de la coordonnée de kilométrage ferroviaire du véhicule ferroviaire (107) par adoption de la formule suivante : d1=LT-r1, x=M1-d1-D ; lorsque le télémètre tridimensionnel (101) est proche du second point de référence, obtention de la distance entre le second point de référence et le télémètre tridimensionnel (101), et calcul de la coordonnée de kilométrage ferroviaire du véhicule ferroviaire par adoption de la formule suivante :

d2=LT-r2, x=M2+d2+D ;

où, d1 et d2 représentent respectivement la distance entre une locomotive (106) et un premier point de référence et la distance entre la locomotive (106) et le second point de référence, LT représente la distance transversale du train ferroviaire sur le tronçon de voie (103), r1 et r2 représentent respectivement la distance entre le premier point de référence et le télémètre tridimensionnel (101) et la distance entre le second point de référence et le télémètre tridimensionnel (101), D représente la distance d'espacement du véhicule ferroviaire (107), m1 et M2 représentent les coordonnées de kilométrage ferroviaire du premier point de référence et du second point de référence respectivement, et x représente la coordonnée de kilométrage ferroviaire du véhicule ferroviaire (107).

**7.** Le système selon la revendication 6, **caractérisé en ce que** lorsque le sous-système de surveillance est configuré pour calculer la distance d'espacement à l'aide de la formule suivante :

$$D_{ij}=lt+\sum_{r=1}^{i-1} lr' + \frac{1}{2}\, li' + \sum_{r=1}^{j-1} kr;$$

où, Dij représente la distance d'espacement du véhicule ferroviaire (107) à la i$^{\text{éme}}$ position derrière la locomotive (106) et au niveau de la j$^{\text{éme}}$ unité de train, *lt* représente la longueur standard de la locomotive (106), *lr'* représente la longueur corrigée du véhicule ferroviaire (107) à une r$^{\text{ème}}$ position derrière la locomotive (106), *li'* représente la longueur corrigée du véhicule ferroviaire (107) à la i$^{\text{ème}}$ position derrière la locomotive (106), et kj représente une distance de séparation entre une (j-1)$^{\text{ème}}$ unité de train et la j$^{\text{ème}}$ unité de train.

8. Le système selon la revendication 1, **caractérisé en ce que** les deux extrémités de chaque tronçon de voie (103) sont dotées de points de référence, et le télémètre tridimensionnel (101) est situé à l'extérieur des points de référence, l'extérieur étant un côté loin de la gare ; lorsque l'objet à positionner s'arrêtant sur le tronçon de voie (103) est un seul véhicule ferroviaire (107), le sous-système de surveillance est configuré pour calculer la coordonnée de kilométrage ferroviaire de l'objet à positionner sur le tronçon de voie (103) sur la base de la longueur standard et des informations de distance relatives à l'objet à positionner sur le tronçon de voie (103) et finit le positionnement de l'objet à positionner sur le tronçon de voie (103) par :

obtention de coordonnées de kilométrage ferroviaire de deux points de référence aux deux extrémités du tronçon de voie ;
lorsque le télémètre tridimensionnel (101) est proche d'un premier point de référence, obtention de la distance entre le premier point de référence et le télémètre tridimensionnel (101), et calcul d'une coordonnée de kilométrage ferroviaire du seul véhicule ferroviaire (107) par adoption de la formule suivante : d1=LT-r1, x=M1-d1-(w1+w2)/2 ; et lorsque le télémètre tridimensionnel (101) est proche du second point de référence, obtention de la distance entre le second point de référence et le télémètre tridimensionnel (101), et calcul d'une coordonnée de kilométrage ferroviaire du seul véhicule ferroviaire (107) par adoption de la formule suivante : d2=LT-r2, x=M2+d2+(w1+w2)/2 ;
où, le premier point de référence et le second point de référence sont respectivement la plus grande des coordonnées de kilométrage ferroviaire et la plus petite des coordonnées de kilométrage ferroviaire dans les deux points de référence, d1 et d2 représentent respectivement la distance entre le seul véhicule ferroviaire (107) et le premier point de référence et la distance entre le seul véhicule ferroviaire (107) et le second point de référence, LT représente la distance transversale du train ferroviaire sur le tronçon de voie (103), r1 et r2 représentent respectivement la distance entre le premier point de référence et le télémètre tridimensionnel (101) et la distance entre le second point de référence et le télémètre tridimensionnel, M1 et M2 représentent respectivement les coordonnées de kilométrage ferroviaire du premier point de référence et du second point de référence, W1 et W2 représentent respectivement la longueur réelle et la longueur standard du seul véhicule ferroviaire (107), et x représente les coordonnées de kilométrage ferroviaire du véhicule ferroviaire (107).

9. Le système selon la revendication 1, **caractérisé en ce que** le sous-système de surveillance est en outre configuré pour :
convertir la coordonnée de kilométrage ferroviaire de l'objet à positionner en une coordonnée géographique après calcul de la coordonnée de kilométrage ferroviaire de l'objet à positionner.

```
┌─────────────────────────────────────────────┐
│     Vehicle number recognition sub-system     │
└─────────────────────────────────────────────┘
                       │
                       │
┌─────────────────────────────────────────────┐
│            Monitoring sub-system             │
└─────────────────────────────────────────────┘
                       │
                       │
┌─────────────────────────────────────────────┐
│        Three-dimensional range finder        │
└─────────────────────────────────────────────┘
```

Figure 1

Figure 2

Figure 3

Figure 4

Figure 5

**EP 3 778 346 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016264163 A1
- US 2007146159 A1
- US 2007150129 A1
- DE 102010031910 A1